# FASCICULE DE BREVET EUROPEEN

(11) **EP 2 665 686 B1**
(45) Date de publication et mention de la délivrance du brevet: **01.08.2018**
(21) Numéro de dépôt: 12701104.7
(22) Date de dépôt: 18.01.2012
(51) Int. Cl.: C02F 3/12

(54) **PROCÉDÉ DE TRAITEMENT BIOLOGIQUE D'EAUX USÉES PAR BIOMASSE GRANULAIRE AÉROBIE**
VERFAHREN ZUR BIOLOGISCHEN ABWASSERBEHANDLUNG MIT EINER AEROBEN GRANULÖSEN BIOMASSE
METHOD FOR THE BIOLOGICAL TREATMENT OF WASTEWATER USING AN AEROBIC GRANULAR BIOMASS

(30) Priorité: 20.01.2011 FR 1150469
(43) Date de publication de la demande: 27.11.2013
(73) Titulaire: Valbio, 31120 Portet Sur Garonne (FR); Institut National des Sciences Appliquées de Toulouse, 31400 Toulouse (FR)
(72) Inventeur: SPERANDIO, Mathieu, F-31810 Venerque (FR); MANAS-LLAMAS, Angela, E-47014 Valladolid (ES); DECKER, François, F-31130 Quint Fonsegrives (FR); BISCANS, Béatrice, F-31750 Escalquens (FR)
(74) Mandataire: Ipside
(86) Numéro de dépôt international: PCT/EP2012/050740
(87) Numéro de publication internationale: WO 2012/098171

(56) Documents cités:
- EP-A1- 1 542 932
- FR-A1- 2 503 690
- JP-A- 2005 238 166
- US-A- 4 917 802
- DATABASE WPI Week 200947 Thomson Scientific, London, GB; AN 2009-L35281 XP002661122, -& CN 101 468 849 A (UNIV BEIJING NORMAL [CN]) 1 juillet 2009 (2009-07-01)
- JUANG Y C ET AL: "Stable aerobic granules for continuous-flow reactors: Precipitating calcium and iron salts in granular interiors", BIORESOURCE TECHNOLOGY, ELSEVIER BV, GB, vol. 101, no. 21, 1 November 2010 (2010-11-01), pages 8051-8057, XP027134508, ISSN: 0960-8524 [retrieved on 2010-06-19]
- KREUK DE M K ET AL: "SIMULTANEOUS COD, NITROGEN AND PHOSPHATE REMOVAL BY AEROBIC GRANULAR SLUDGE", BIOTECHNOLOGY AND BIOENGINEERING, WILEY ETC, vol. 90, no. 6, 20 June 2005 (2005-06-20), pages 761-769, XP001230974, ISSN: 0006-3592, DOI: 10.1002/BIT.20470
- S Yeoman ET AL: "The removal of phosphorus during wastewater treatment: A review", ENVIRONMENTAL POLLUTION, vol. 49, no. 3, 1 January 1988 (1988-01-01), pages 183-233, XP055378845, GB ISSN: 0269-7491, DOI: 10.1016/0269-7491(88)90209-6
- CARLSSON H ET AL: "Calcium phosphate precipitation in biological phosphorus removal systems", WATER RESEARCH, ELSEVIER, AMSTERDAM, NL, vol. 31, no. 5, 1 May 1997 (1997-05-01), pages 1047-1055, XP004058643, ISSN: 0043-1354, DOI: 10.1016/S0043-1354(96)00282-5

## Description

La présente invention s'inscrit dans le domaine de l'épuration des eaux usées. Plus particulièrement, elle concerne un procédé de traitement biologique d'eaux usées par une biomasse aérobie, qui assure notamment l'élimination du phosphore contenu dans ces eaux.

Les eaux usées, en particulier issues des industries du domaine de l'agro-alimentaire, sont une source importante de pollution environnementale. C'est notamment le cas des eaux usées contenant du phosphore en grande quantité, telles qu'il est souvent généré par exemple par les industries de transformation laitière. De telles eaux usées sont susceptibles d'engendrer des problèmes sérieux d'eutrophisation dans les lacs, rivières et mers.

A l'heure actuelle, l'élimination du phosphore contenu dans les eaux usées est mise en oeuvre par des procédés physico-chimiques, au moyen de sels métalliques tels que des sels de fer ou d'aluminium induisant la précipitation physico-chimique du phosphore. Cependant, d'une part de tels procédés sont coûteux en mise en oeuvre, et d'autre part ces sels métalliques sont polluants. Ces procédés, qui produisent des boues très chargées en éléments métalliques polluants, ne procurent par conséquent pas de bénéfice environnemental.

Il a été proposé par l'art antérieur d'autres types de procédés d'élimination du phosphore contenu dans des eaux usés, qui remédient à ces inconvénients. Ces procédés de type biologique, dits EBPR, pour l'anglais Enhanced Biological Phosphorus Removal (procédés biologiques d'élimination renforcée de phosphore), mettent en oeuvre des boues floculaires et tirent parti, pour réaliser l'élimination du phosphore contenu dans un effluent, de phénomènes de suraccumulation intracellulaire de phosphore. Ces procédés présentent cependant des rendements d'épuration bas. De plus, le phosphore s'accumule dans les flocs sous une forme instable, ce qui ne permet pas sa valorisation ultérieure.

On connait par ailleurs des procédés de formation de granules de biomasse aérobie pour le traitement d'eaux usées. Ces procédés comprennent les étapes successives suivantes, appliquées de façon répétée : introduction d'un effluent d'eaux usées dans un réacteur contenant de la biomasse, application dans ce réacteur de conditions aérobie, puis décantation des granules de biomasse aérobie ainsi formés et retrait d'une partie de l'effluent traité. Des exemples de tels procédés sont notamment décrits dans les brevets EP 1 542 932 A1, US-B-6,566,119 ou US-B-6,793,822.

La présente invention vise à remédier aux inconvénients des procédés de traitement d'eaux usées existant, notamment à ceux mentionnés ci-avant, en proposant un procédé de traitement d'eaux usées contenant du phosphore, qui permette d'éliminer efficacement ce dernier, en même temps que l'ensemble des autres substances polluantes qui y sont contenues, tout en étant moins onéreux à mettre en oeuvre que les procédés de l'art antérieur et en présentant peu d'effets néfastes pour l'environnement. L'invention vise également à ce que ce procédé permette de récupérer facilement le phosphore ainsi éliminé des eaux usées sous une forme stable, en vue d'une utilisation ultérieure.

A l'origine de l'invention, il a été découvert par les présents inventeurs qu'un procédé biologique mettant en oeuvre une biomasse aérobie, appliqué à des eaux usées contenant une quantité importante de phosphore, permettait, lorsqu'il était réalisé dans des conditions opératoires particulières, de produire des granules de biomasse aérobie dans le coeur desquels étaient immobilisés des cristaux de phosphate minéral.

Les inventeurs ont su tirer profit de ces observations pour proposer un procédé biologique de traitement des eaux usées permettant non seulement d'atteindre un rendement élevé d'élimination des substances polluantes, en particulier du phosphore, qui y sont contenues, mais également de produire des granules de biomasse stables riches en phosphate minéral et revalorisables.

Selon l'invention, un procédé de traitement biologique, par une biomasse aérobie, d'eaux usées contenant des substances polluantes, notamment du phosphore, de l'azote et des polluants organiques, en vue de leur épuration, comporte une pluralité de cycles successifs d'une durée prédéterminée pour obtenir un rendement d'élimination desdites substances polluantes supérieur ou égal à 90 %, chacun desdits cycles comportant les étapes de :
- introduction d'un effluent d'eaux usées contenant du phosphore et du calcium dans des concentrations respectives déterminées, dans un réacteur contenant de la biomasse,
- application d'une phase aérobie, par introduction dans le réacteur d'un flux d'un gaz contenant de l'oxygène, pendant une durée de temps prédéterminée suffisante pour former des granules de biomasse aérobie dans le réacteur,
- décantation des granules de biomasse aérobie ainsi formés,
- et retrait d'au moins une partie de l'effluent traité.

Ce procédé se caractérise en ce qu'après chaque étape d'introduction d'effluent dans le réacteur, la phase aérobie est précédée d'une phase en conditions anoxiques et après chaque étape d'introduction d'effluent dans le réacteur on maintient en outre le pH dans le réacteur à une valeur supérieure à 8 et à une valeur inférieure à 9 pendant une durée de temps au moins égale à 10 % de la durée du cycle, et en ce que la teneur de calcium de l'effluent est ajustée de sorte à obtenir un rapport molaire calcium /phosphore supérieur ou égal à 1. On entend, par biomasse aérobie, de manière classique en elle-même, un ensemble de bactéries hétérotrophes et/ou autotrophes capables de se multiplier et de dégrader des substrats en consommant de l'oxygène.

La biomasse contenue dans le réacteur dans lequel est introduit l'effluent peut aussi bien se présenter sous forme granulaire, notamment en cours de fonctionnement normal du réacteur, que sous forme non granulaire, au moment du démarrage, c'est-à-dire de la mise en fonctionnement initiale, du réacteur.

La durée de cycle, permettant d'obtenir un rendement d'élimination des substances polluantes contenues dans l'effluent supérieur ou égal à 90 %, est aisément déterminable par l'homme du métier, en fonction notamment de la concentration en substances polluantes dans l'effluent.

De telles conditions opératoires conformes à l'invention induisent avantageusement la précipitation d'une quantité importante de phosphore dans le coeur des granules formés dans le réacteur, sous forme de phosphate de calcium, et principalement d'hydroxyapatite Ca₅(PO₄)₃(OH). Elles provoquent notamment une augmentation importante de la quantité de phosphore intracellulaire, et la cristallisation de ce dernier, sous forme d'hydroxyapatite, dans le coeur des granules de biomasse aérobie qui se forment dans le réacteur.

La phase en conditions anoxiques peut par exemple être réalisée par simple agitation sans aération, ou par introduction d'un flux d'azote gazeux dans le réacteur, cette introduction réalisant en outre le mélange de l'effluent et de la biomasse à l'intérieur du réacteur. Préférentiellement, elle est réalisée par une recirculation d'un flux liquide prélevé dans une partie supérieure du réacteur, et réinjecté dans une partie inférieure du réacteur.

Préférentiellement, dans des conditions opératoires du procédé selon l'invention adéquates pour assurer la dépollution des eaux usées telles qu'elles sont usuellement issues des industries du domaine de l'agro-alimentaire, le pH est maintenu à une valeur supérieure à 8 pendant au moins 10 minutes, préférentiellement pendant au moins 20 minutes.

Le phosphate ainsi formé dans le coeur des granules constitue un support minéral pour les bactéries, si bien que les granules obtenus sont denses et qu'ils présentent en particulier des propriétés avantageuses en termes de stabilité et de capacité de décantation. Il en découle de nombreux avantages, notamment une séparation plus rapide et meilleure des granules et de l'eau traitée lors de la phase de décantation, la possibilité d'utiliser de plus grandes charges de biomasse dans le réacteur pour un même volume occupé, et par conséquent d'accroître le volume d'eaux usées traité à chaque opération, etc. On peut ainsi par exemple utiliser dans le réacteur une concentration en biomasse aussi élevée que 30 g/l.

Le procédé selon l'invention s'avère en outre moins coûteux en fonctionnement et en investissement que les procédés proposés par l'art antérieur. Il ne met en oeuvre aucun sel métallique polluant, si bien qu'il participe à la réduction de l'empreinte environnementale d'une filière de traitement des eaux usées plus globale au sein de laquelle il peut être intégré.

Les granules de biomasse obtenus, dans le coeur desquels s'est accumulé le phosphate de calcium, constituent avantageusement un produit solide facile à déshydrater, facile à stocker, et valorisable, en particulier dans le domaine de l'agriculture. En cela, le procédé selon l'invention, en même temps qu'il assure l'épuration des eaux usées chargées en phosphore, fournit une solution à un problème actuel d'épuisement des ressources géologiques de phosphate, les granules de biomasse formés dans le réacteur pouvant être, après un traitement adéquat, utilisés en tant que source de phosphate de calcium.

A cet effet, dans des modes de mise en oeuvre préférés de l'invention, le procédé de traitement comporte pour au moins un des cycles une étape de récupération de granules de biomasse aérobie postérieure à l'étape de décantation.

L'effluent d'eaux usées auquel s'applique l'invention peut être de tout type. Les eaux usées issues de l'industrie agro-alimentaire contiennent typiquement divers polluants organiques, azotés et phosphorés. Dans le cas où l'effluent ne comporte pas naturellement de sels de calcium, il est supplémenté en calcium préalablement ou simultanément à son introduction dans le réacteur. Selon l'invention, la teneur en calcium de l'effluent est ajustée de sorte à obtenir un rapport molaire calcium / phosphore supérieur ou égal à 1, et préférentiellement supérieur ou égal à 1,7. En fonction des caractéristiques de l'effluent particulier à traiter, une telle teneur en calcium peut le cas échéant être obtenue par ajout de sels de calcium dans l'effluent préalablement ou simultanément à son introduction dans le réacteur. Elle favorise avantageusement une précipitation dans le coeur des granules d'une quantité importante du phosphore présent dans l'effluent, sous forme de cristaux d'hydroxyapatite.

Par ailleurs, la biomasse initialement introduite dans le réacteur est de préférence choisie pour contenir une large gamme de types de microorganismes. Les bactéries les plus adaptées à l'effluent particulier auquel elles sont ensuite soumises s'y développent et prolifèrent naturellement, alors que les autres disparaissent progressivement. Selon l'invention, on maintient le pH dans le réacteur à une valeur inférieure à 9 pendant ladite durée de temps au moins égale à 10 % de la durée du cycle.

Une plage de pH entre 8 et 9 s'avère notamment tout à fait avantageuse, en ce qu'elle assure la précipitation de phosphate de calcium sous forme d'hydroxyapatite dans le coeur des granules se formant dans le réacteur. Par ailleurs, bien qu'une telle plage de pH ne soit pas en elle-même optimale pour le métabolisme de la plupart des souches bactériennes, on constate que de telles conditions opératoires ne perturbent avantageusement pas ce métabolisme.

Dans des modes de mise en oeuvre préférés de l'invention, des nitrates sont en outre ajoutés dans l'effluent, dans une quantité proportionnelle à la Demande Chimique en Oxygène de ce dernier, et adéquate pour obtenir dans l'effluent un rapport massique azote / Demande Chimique en Oxygène compris entre 1/10 et 1/4, ceci préalablement ou simultanément à son introduction dans le réacteur. Ces nitrates permettent avantageusement, en optimisant les réactions de dénitrification se produisant au sein des granules de biomasse, d'assurer un meilleur contrôle du pH dans le coeur même de ces granules, favorisant ainsi un meilleur contrôle de la précipitation du phosphore en leur intérieur, ainsi que de la forme minérale du précipité ainsi obtenu.

On définit ici la Demande Chimique en Oxygène, ou DCO, de façon classique en elle-même, c'est-à-dire comme représentant, exprimée en mg O₂ / litre H₂0, la quantité d'oxygène nécessaire pour oxyder toute la matière organique contenue dans le milieu liquide.

Le maintien du pH dans la plage de valeurs conforme à l'invention peut être réalisé par tout moyen classique en lui-même, par exemple par ajout dans le réacteur de réactifs acides ou basiques, selon les besoins, et / ou réglage de différents paramètres opératoires, tels que le débit du flux gazeux et la durée de la phase aérobie, et / ou la durée de la phase en conditions anoxiques, et / ou l'ajout de nitrates dans l'effluent, etc.

Dans la pratique, il a été constaté par les présents inventeurs qu'un réglage initial adéquat des paramètres opératoires permettait de maintenir le pH dans la plage de valeurs adéquate durant la durée de temps préconisée par la présente invention, et par là-même d'obtenir une précipitation du phosphore importante et maîtrisée, sous la forme minérale de l'hydroxyapatite, et ce sans qu'il soit besoin d'ajouter de réactifs acides ou basiques dans le réacteur.

Dans des modes de mise en oeuvre de l'invention, on ajuste le pH dans le réacteur, lorsque cela s'avère nécessaire, en faisant varier le débit du flux de gaz contenant de l'oxygène lors de ladite phase aérobie.

On ne préjugera pas ici des mécanismes chimiques et biologiques sous-tendant la formation d'un précipité de phosphate de calcium dans les granules de biomasse, ces mécanismes s'avérant relativement complexes. Cependant, il a été observé par les présents inventeurs que l'alternance de phases d'anoxie et de phases aérobie dans le réacteur, induisant des réactions de dénitrification et de nitrification catalysées par des bactéries dénitrifiantes / nitrifiantes proliférant alors dans ce dernier, en présence d'une source carbonée présente dans les eaux usées, participe à créer dans le réacteur des conditions propices à une précipitation du phosphate de calcium de façon très concentrée dans le coeur des granules de biomasse. Ce phosphate de calcium, immobilisé à l'intérieur des granules de biomasse, durant toutes les étapes de manipulation de cette dernière, est alors avantageusement plus facile à récupérer en fin du procédé.

De façon générale, les eaux usées pour la dépollution desquelles le procédé selon l'invention est destiné à être appliqué, contiennent, outre des polluants phosphorés, des polluants organiques et des polluants azotés tels que des ammoniums ou des nitrates. Un procédé de traitement répondant à l'une ou plusieurs des caractéristiques ci-avant préconisées par la présente invention, permet de façon tout à fait avantageuse d'obtenir en une seule étape un haut rendement d'élimination simultanée du carbone, de l'azote et du phosphore hors de l'effluent. A l'issue du traitement, l'effluent est prêt à être rejeté en toute sécurité directement dans le milieu naturel. Décrit est aussi un procédé d'obtention d'une source de phosphate de calcium à partir d'eaux usées contenant du phosphore, selon lequel :
- on met en oeuvre un procédé de traitement biologique d'eaux usées répondant à l'une ou plusieurs des caractéristiques décrites ci-avant,
- on récupère des granules de biomasse aérobie formés dans le réacteur,
- et on déshydrate ces granules.

Le cas échéant, ces étapes sont suivies d'une étape d'extraction du phosphate de calcium contenu dans les granules.

Dans le cadre d'un procédé de traitement des eaux usées mettant en oeuvre une pluralité de cycles successifs d'alimentation du réacteur en effluent, traitement de ce dernier par les microorganismes formant la biomasse en conditions aérobie, décantation et retrait d'effluent, la récupération des granules peut être effectuée avec une fréquence variable, en fonction de la concentration en phosphore de l'effluent traité.

Ces granules, stables et facilement déshydratables, constituent avantageusement une source de phosphate de calcium valorisable, notamment dans le domaine de l'agriculture. Décrits sont aussi des granules de biomasse aérobie obtenus par un procédé répondant aux caractéristiques ci-dessus, qui sont caractérisés par un coeur contenant du phosphate de calcium sous forme d'hydroxyapatite.

Un autre aspect de l'invention est l'utilisation de tels granules de biomasse aérobie, dont le coeur contient de l'hydroxyapatite, en tant que fertilisants.

L'invention sera maintenant plus précisément décrite dans le cadre de l'exemple de mise en oeuvre préféré ci-après, qui n'en est nullement limitatif, avec l'appui des figures 1 à 8, dans lesquelles :
- la figure 1 montre une micrographie obtenue pour un échantillon de boues totales prélevé du réacteur après mise en oeuvre d'un procédé de traitement des eaux usées selon l'invention ;
- la figure 2a est un graphe illustrant l'évolution en fonction du temps des concentrations en NH₄⁺, N-NO₃⁻, P-PO₄³⁻ et DCO dans des échantillons prélevés du réacteur, à différents intervalles d'un cycle de traitement d'un procédé selon l'invention, pour un débit de gaz d'aération de 160 l/h ;
- la figure 2b est un graphe illustrant l'évolution en fonction du temps des concentrations en NH₄⁺, N-NO₃⁻, P-PO₄³⁻ et DCO dans des échantillons prélevés du réacteur, à différents intervalles d'un cycle de traitement d'un procédé selon l'invention, pour un débit de gaz d'aération de 350 l/h ;
- la figure 3 est un graphe illustrant l'évolution en fonction du temps des concentrations en potassium K⁺, calcium Ca²⁺, magnésium Mg²⁺, oxygène O₂ et du pH, dans des échantillons prélevés du réacteur, à différents intervalles d'un cycle de traitement d'un procédé selon l'invention, pour un débit de gaz d'aération de 350 l/h ;
- la figure 4 montre une micrographie d'une tranche centrale d'un granule obtenu dans le réacteur, après mise en oeuvre d'un procédé de traitement des eaux usées selon l'invention ;
- la figure 5 montre un spectre obtenu par spectroscopie Raman pour des tranches centrales de granules obtenus dans le réacteur, après différents temps de mise en oeuvre d'un procédé de traitement des eaux usées selon l'invention ;
- la figure 6 montre des spectres obtenus par spectroscopie Raman pour une tranche centrale d'un granule obtenu dans le réacteur, après mise en oeuvre d'un procédé de traitement des eaux usées selon l'invention, ainsi que pour l'hydroxyapatite HAP, la struvite STR et la brushite DCPD ;
- la figure 7 montre une image obtenue par microscopie électronique à balayage pour une tranche centrale d'un granule obtenu dans le réacteur, après mise en oeuvre d'un procédé de traitement des eaux usées selon l'invention ;
- et la figure 8 montre un grossissement d'un détail de l'image de la figure 7.

### Procédé de traitement d'eaux usées

Un exemple d'un procédé selon l'invention pour le traitement d'eaux usées comportant diverses substances polluantes, notamment organiques, azotées et phosphorées, est mis en oeuvre de la façon suivante.

Des granules de biomasse aérobie sont cultivés, à une concentration initiale de 2,8 g DCO / l, dans un réacteur de type colonne, classique en lui-même, d'un volume de travail de 17 l, de diamètre 15 cm, de rapport hauteur / diamètre égal à 7, avec une plaque déflectrice de longueur 83 cm et de largeur 15 cm.

Un diffuseur de fines bulles de diamètre de 3 mm est inséré dans le fond du réacteur, d'un côté de la plaque déflectrice. Ce diffuseur assure le mélange d'effluent et de biomasse dans le réacteur, par la diffusion dans ce dernier d'azote gazeux pour les phases anoxiques, et d'air pour les phases aérobie. Des débits de gaz de 160, 250 ou 350 N l/h, sont appliqués.

La température est maintenue à une valeur constante de 20 °C au moyen d'une chemise à circulation d'eau placée autour du réacteur, durant toutes les étapes du procédé.

Un effluent synthétique de composition suivante est utilisé :

| | |
|---|---|
| Demande Chimique en Oxygène (DCO) | 1000 mg/l |
| (contribution de 25 % de glucose, acétate, acide propionique et éthanol) | |
| PO₄³⁻ | 30 mg P /l |
| Ca2+ | 46 mg/l |
| CO₃²⁻ | 100 mg/l |
| MgSO₄, 7H₂O | 12 mg/l |
| NH₄⁺ | 50 mg N /L |
| NO₃⁻ | 100 mg N /l |

Le rapport molaire calcium / phosphore dans cet effluent est égal à 1,18.

Des cycles de traitement successifs sont mis en oeuvre de la façon suivante :
- on introduit un volume de 8 I de l'effluent synthétique dans le réacteur, par un fond de ce dernier, pendant une durée de 15 minutes,
- on applique des conditions anoxiques, par diffusion dans le réacteur d'azote gazeux, pendant 20 minutes,
- on applique des conditions aérobies, par diffusion d'air dans le réacteur, pendant 145 minutes,
- on laisse les boues présentes dans le réacteur décanter, en interrompant toute injection de gaz dans le réacteur, pendant 30 minutes,
- et on retire du réacteur un volume de 8 I de l'effluent, pendant 30 minutes.

Le temps de rétention hydraulique est fixé à 8,5 heures, avec un rapport d'échange volumétrique de 50 %.

La durée totale de chaque cycle est égale à 240 minutes.

Après chaque étape d'introduction d'effluent dans le réacteur, on maintient le pH à une valeur comprise entre 8 et 9 pendant au moins 24 minutes.

La durée totale de mise en oeuvre du procédé comportant les cycles successifs ci-avant est de 720 jours.

La concentration d'oxygène et le pH dans le réacteur sont mesurés en continu au moyen de sondes sélectives introduites dans le réacteur, ces sondes étant classiques en elles-mêmes.

Lorsqu'il est observé que la valeur du pH descend en dessous de 8, ou s'élève en dessus de 9, le pH est ajusté de sorte à le ramener dans la fourchette de 8 à 9, par exemple en faisant varier le débit d'azote gazeux lors de la phase anoxique et/ou en faisant varier le débit du flux d'air lors de la phase aérobie.

### Caractérisation des phases liquides et solides dans le réacteur durant la mise en oeuvre du procédé

Des échantillons de boues totales sont prélevés du réacteur à intervalles réguliers, et soumis aux analyses ci-après.

### Analyses chimiques

Les analyses chimiques sont conduites suivant des méthodes standards conformes aux normes AFNOR, 1994, pour les DCO (NFT 90-101), les matières solides en suspension dans la liqueur mixte (MES) (NFT 90-105), et les matières solides volatiles en suspension dans la liqueur mixte (MVS) (NFT 90-106). Les concentrations en NO₂⁻, NO₃⁻, PO₄³⁻, NH₄⁺, Ca²⁺, K⁺, Mg²⁺, sont déterminées par chromatographie à échange d'ions (NFT 90-023) après qu'un échantillon ait été filtré par des filtres acétate de taille de pores de 0,2 µm.

A l'issue de 540 jours de mise en oeuvre du procédé, on mesure des concentrations respectives en MES et MVS de 30-35 g/l et 21-25 g/l. Ces résultats reflètent une concentration en biomasse plus élevée que dans les procédés conventionnels biologiques à boues floculaires. La teneur en matières minérales (10 g/l) constitue plus de 30 % de la concentration en matières en suspension (MES), ce qui démontre une précipitation importante dans les agrégats.

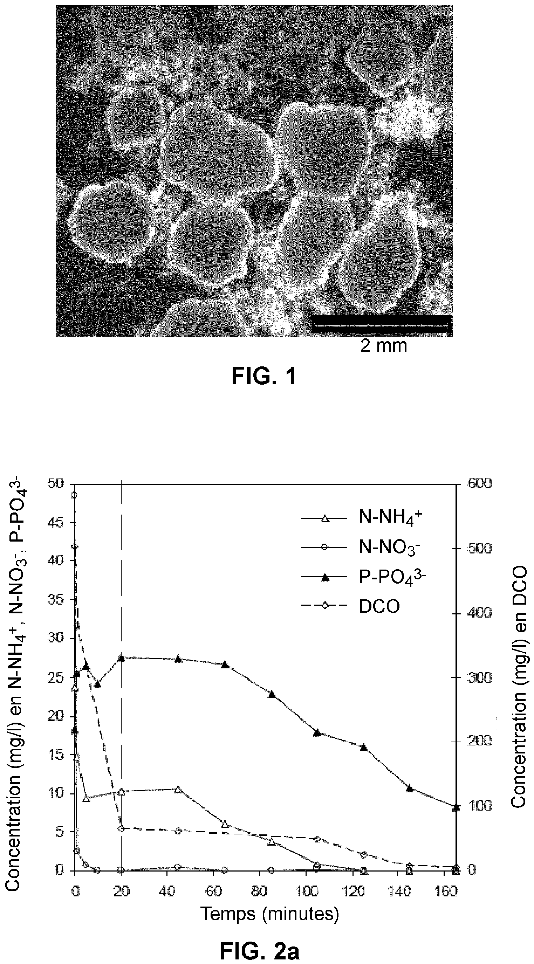

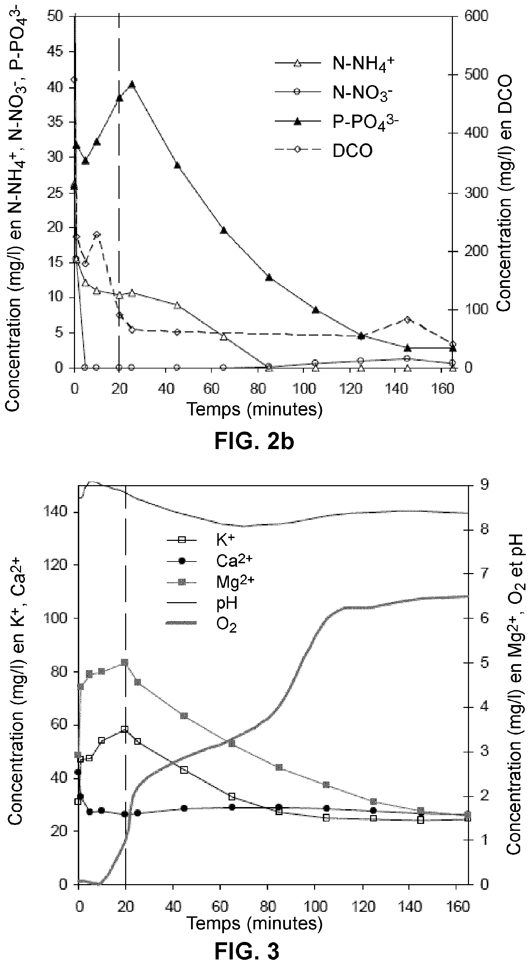

Des analyses cinétiques sont réalisées sur des échantillons de boues totales prélevées à intervalles réguliers durant un cycle de traitement, afin d'estimer les taux d'élimination d'ammonium, nitrate, DCO et phosphates initialement contenus dans l'effluent. Les figures 2a et 2b illustrent l'évolution des concentrations en ammonium NH₄⁺, N-NO₃⁻, P-PO₄³⁻ et DCO en fonction du temps, pour des conditions de débit de gaz d'aération respectives de 160 l/h et 350 l/h. La figure 3 illustre l'évolution des concentrations en potassium K⁺, calcium Ca²⁺, magnésium Mg²⁺, oxygène O₂ et du pH en fonction du temps, pour des conditions de débit de gaz d'aération de 350 l/h. Sur ces figures, la séparation entre phase anoxique et phase aérobie est illustrée par une ligne verticale en pointillés.

Les taux d'élimination observés à la fin de 540 jours de mise en oeuvre du procédé sont de 100 % pour l'ammonium, 100 % pour les nitrates, 82 % pour les ortho-phosphates et 99 % pour les DCO solubles. Ces taux témoignent d'une épuration efficace de l'effluent, tant du point de vue des matières carbonées que des matières azotées et des phosphates. Cette épuration a été réalisée simultanément pour tous les polluants, par un seul et même procédé.

On constate par ailleurs qu'au débit de gaz d'aération de 350 l/h, le pH reste supérieur à 8 durant toute la durée du cycle.

### Observations microscopiques

Des observations microscopiques sur des échantillons de boues totales prélevés dans le réacteur, après différents temps de mise en oeuvre du procédé de traitement, sont réalisées au moyen d'un microscope photonique binoculaire BiomedLitz®.

Un exemple de micrographie ainsi obtenue sur un échantillon prélevé après 520 jours de mise en oeuvre du procédé est donné sur la figure 1. On y observe que la liqueur mixte contenue dans le réacteur est constituée principalement de granules, et d'une faible proportion de flocs, ces derniers disparaissant progressivement au fur et à mesure des prélèvements dans le temps.

La distribution de taille des particules est mesurée au moyen d'un analyseur Malvern 2000 Mastersizer®. Elle révèle qu'après 420 jours de traitement, le diamètre moyen des granules est de 800 µm.

Afin d'analyser la structure interne des granules, ces derniers sont coupés en tranches fines de 100 µm d'épaisseur, au moyen d'un cryomicrotome Leica CM 30505 Kryostat®.

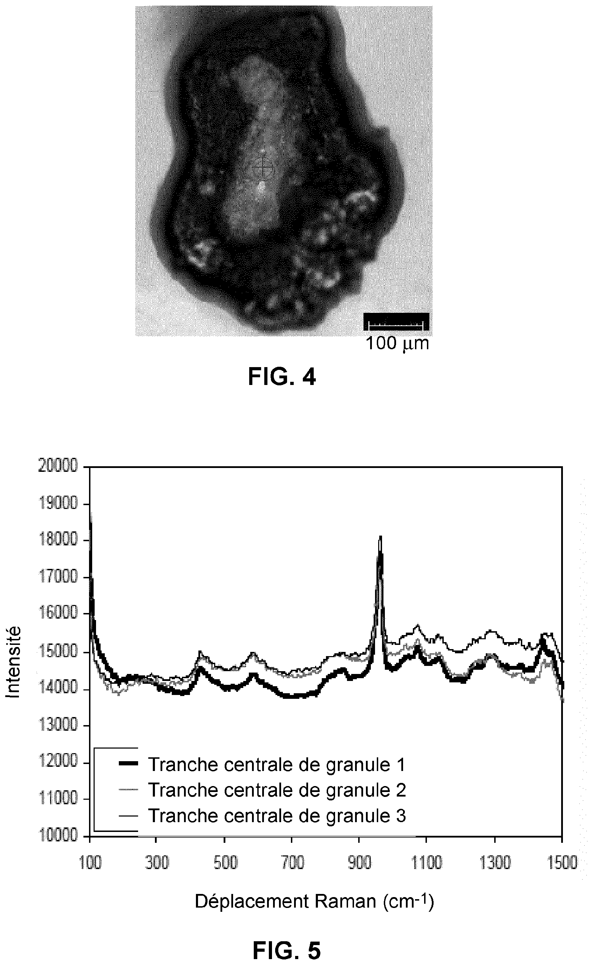

Une tranche centrale d'un granule de biomasse obtenu après 450 jours de mise en oeuvre du procédé de traitement, observée au moyen d'un microscope photonique binoculaire BiomedLitz®, est montrée sur la figure 4. Cette observation révèle la présence d'un précipité blanc minéral concentré dans le centre du granule.

### Analyses par spectroscopie Raman

Des analyses de spectroscopie Raman sont conduites sur des tranches centrales de granules, à une longueur d'onde de 785 nm dans le domaine du visible. Deux fibres optiques différentes sont utilisées pour le rayon incident (50 µm) et le rayon collecté (100 µm). Un exemple de spectre obtenu pour trois tranches centrales de granules obtenus respectivement après 390 (tranche centrale 1), 420 (tranche centrale 2) et 450 (tranche centrale 3) jours de mise en oeuvre du procédé, est montré sur la figure 5.

On observe que toutes les tranches présentent les mêmes pics, indépendamment du temps de prélèvement. Les pics les plus importants observés sur ces spectres sont associés à des déplacements Raman de 430, 588, 850, 962, 1072, 1135, 1295 et 1448 cm⁻¹.

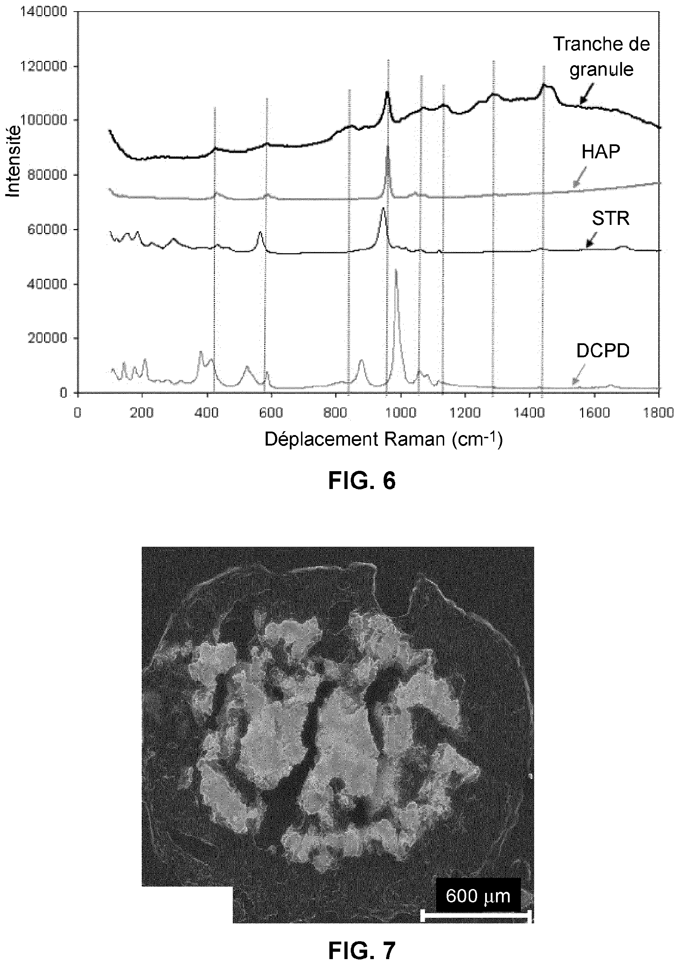

Ces spectres sont comparés avec des spectres de référence obtenus pour différents phosphates minéraux que sont l'hydroxyapatite HAP, la struvite STR et la brushite DCPD. La figure 6 montre les spectres Raman de référence des minéraux ci-dessus, ainsi que le spectre Raman de la Tranche centrale 1.

On y observe que parmi les minéraux de référence, l'hydroxyapatite est celui qui présente le profil le plus proche de celui de la tranche de granule, tant en intensité qu'en nombre d'onde. Le spectre de référence de l'hydroxyapatite présente en effet quatre pics correspondant à ceux de la tranche de granule (427, 589, 962, 1072 cm⁻¹). Ce résultat démontre que l'hydroxyapatite est la forme principale de phosphate de calcium présent sous forme de précipité à l'intérieur des granules.

### Analyses par microscopie électronique à balayage et par dispersion d'énergie des rayons X

Préalablement à l'analyse par dispersion d'énergie des rayons X (EDX), les granules sont coupés en tranches fines de 100 µm d'épaisseur, au moyen d'un cryomicrotome Leica CM 30505 Kryostat®.

L'analyse par dispersion d'énergie des rayons X a été réalisée au moyen d'un analyseur de photons X, avec une limite de détection de 127 eV. Cet analyseur est couplé avec un microscope électronique à balayage fonctionnant dans une chambre sous pression réduite.

Une image obtenue par microscopie électronique à balayage sur une tranche centrale d'un granule prélevé à la fin de la phase aérobie après 711 jours de traitement est montrée sur la figure 7. On y observe nettement une partie centrale plus claire, correspondant au coeur minéral du granule, entourée d'une partie plus foncée, correspondant à la matrice organique.

L'analyse couplée par dispersion des rayons X révèle que le calcium et le phosphore sont les éléments principaux présents ensemble dans les précipités au centre des granules. Ces éléments ne se retrouvent qu'à l'état de traces dans l'enveloppe organique. Ce résultat démontre clairement que le phosphate de calcium est concentré dans le coeur des granules de biomasse.

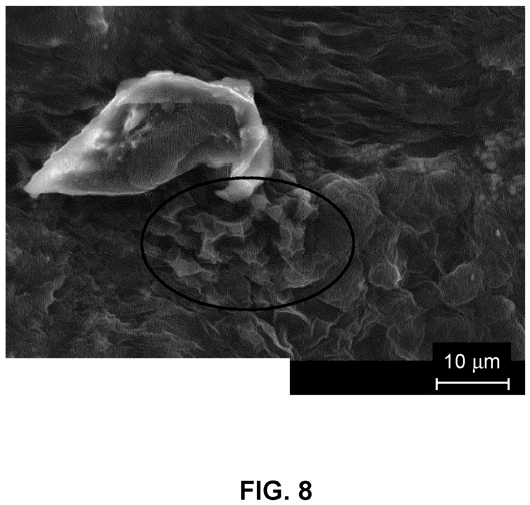

Sur des images obtenues à une plus grande résolution, comme montré sur la figure 8, on observe en outre des structures prismatiques similaires à celles de l'hydroxyapatite.

Une analyse quantitative réalisée sur cinq échantillons différents montre en outre que le rapport atomique Ca/P obtenu pour le précipité minéral présent au centre des granules est égal à 1,63 ± 0,05, et relativement proche du rapport théorique pour l'hydroxyapatite, qui est de 1,67.

Des analyses parallèles réalisées sur les flocs et le surnageant n'y révèlent pas de présence significative de phosphate de calcium. Ce dernier se trouve donc bien concentré à l'intérieur des granules lors de la mise en oeuvre du procédé de traitement selon l'invention.

### Analyse par diffraction des rayons X

Préalablement à l'analyse par diffraction des rayons X (XRD), les granules sont séchés et brûlés dans un four à 500 °C pendant 2 heures, de sorte à en éliminer la fraction organique.

L'analyse par diffraction des rayons X est réalisée au moyen d'un diffractomètre Brucker® D5000, comportant un tube de cobalt diffusant de 4 à 70° en 2θ.

Des échantillons de granules obtenus après différents temps de mise en oeuvre du procédé selon l'invention sont analysés, et les diffractogrammes obtenus comparés avec le spectre de référence de l'hydroxyapatite. Les résultats obtenus sont cohérents avec la présence majoritaire dans les granules de phosphate de calcium sous forme principalement d'hydroxyapatite.

Les résultats d'analyse ci-avant démontrent clairement que :
- le procédé conforme à l'invention de traitement biologique d'eaux usées permet d'éliminer simultanément et efficacement les polluants tant organiques qu'azotés et phosphorés,
- les conditions opératoires conformes à l'invention, notamment en terme de pH maintenu à l'intérieur du réacteur, conduisent à la formation, de façon concentrée à l'intérieur des granules de biomasse, d'un précipité minéral de phosphate de calcium, majoritairement sous forme d'hydroxyapatite.

A l'issue de ce procédé de traitement des eaux usées, les granules de biomasse obtenus peuvent être récupérés, puis déshydratés, et ils constituent une source valorisable de phosphate de calcium.

Ces granules sont en outre denses et stables, si bien qu'ils autorisent notamment des chargements du réacteur en biomasse aussi élevés que 30 g/l.

Le procédé selon l'invention est avantageusement moins coûteux à mettre en oeuvre que les procédés proposés par l'art antérieur, et il ne nécessite l'utilisation d'aucun additif polluant.

La description ci-avant illustre clairement que par ses différentes caractéristiques et leurs avantages, la présente invention atteint les objectifs qu'elle s'était fixés. En particulier, elle propose un procédé biologique de traitement d'eaux usées par une biomasse granulaire aérobie, qui permet l'élimination simultanée des polluants organiques, azotés et phosphorés, avec des rendements élevés, et la production d'agrégats de biomasse stables riches en phosphate minéral revalorisables.

## Revendications

1. Procédé de traitement biologique par une biomasse aérobie d'eaux usées contenant des substances polluantes, comportant une pluralité de cycles successifs d'une durée prédéterminée pour obtenir un rendement d'élimination desdites substances polluantes supérieur ou égal à 90 %, chacun desdits cycles comportant les étapes de :
- introduction d'un effluent d'eaux usées contenant du phosphore et du calcium dans des concentrations respectives déterminées, dans un réacteur contenant de la biomasse,
- application d'une phase aérobie par introduction dans ledit réacteur d'un flux d'un gaz contenant de l'oxygène, pendant une durée de temps prédéterminée suffisante pour former des granules de biomasse aérobie dans le réacteur,
- décantation des granules de biomasse aérobie ainsi formés,
- et retrait d'au moins une partie de l'effluent traité,
**caractérisé en ce qu'**après chaque étape d'introduction d'effluent dans le réacteur la phase aérobie est précédée d'une phase en conditions anoxiques et après chaque étape d'introduction d'effluent dans le réacteur on maintient le pH dans ledit réacteur à une valeur supérieure à 8 et à une valeur inférieure à 9 pendant une durée de temps au moins égale à 10 % de la durée du cycle,
et **en ce que** la teneur en calcium de l'effluent est ajustée de sorte à obtenir un rapport molaire calcium / phosphore supérieur ou égal à 1.

2. Procédé de traitement selon l'une des revendications 1, **caractérisé en ce que** la teneur en calcium de l'effluent est ajustée de sorte à obtenir un rapport molaire calcium / phosphore supérieur ou égal à 1,7.

3. Procédé de traitement selon l'une quelconque des revendications 1 à 2, **caractérisé en ce qu'**on ajuste le pH dans ledit réacteur en faisant varier le débit du flux du gaz contenant de l'oxygène lors de ladite phase aérobie.

4. Procédé de traitement selon l'une quelconque des revendications 1 à 3, **caractérisé en ce que** la phase en conditions anoxiques est réalisée par une recirculation d'un flux liquide prélevé dans une partie supérieure du réacteur, et réinjecté dans une partie inférieure du réacteur.

5. Procédé de traitement selon l'une quelconque des revendications 1 à 4, **caractérisé en ce que** des nitrates sont ajoutés dans l'effluent, dans une quantité adéquate pour y obtenir un rapport massique azote / Demande Chimique en Oxygène compris entre 1/10 et 1/4.

6. Procédé de traitement selon l'une quelconque des revendications 1 à 5, **caractérisé en ce qu'**il comporte pour au moins un desdits cycles une étape de récupération de granules de biomasse aérobie postérieure à ladite étape de décantation.

7. Procédé d'obtention d'une source de phosphate de calcium à partir d'eaux usées contenant du phosphore, selon lequel :
- on met en oeuvre un procédé de traitement biologique d'eaux usées selon l'une quelconque des revendications 1 à 6,
- on récupère des granules de biomasse aérobie formés dans le réacteur,
- et on déshydrate lesdits granules.

## Patentansprüche

1. Eine Methode zur biologischen Behandlung von Abwasser, welches Schadstoffe enthält, wozu eine aerobe Biomasse genutzt wird, mit einer Vielzahl an aufeinanderfolgenden Zyklen, die prädefiniert werden, um eine Schadstoffentfernung mit bis zu 90 %iger Effizienz zu erreichen. Jeder dieser Zyklen enthält folgende Schritte
- Einlass von behandeltem Abwasser, welches Phospor und Kalzium in abgestimmten Konzentrationen enthält, in eine reaktorenthaltende Biomasse;
- Anwendung einer aeroben Phase durch das Einlassen eines mit Sauerstoff versetzten Gasflusses in den besagten Reaktor, und zwar für eine festgelegte Zeit, die ausreichend ist, um aerobes Biomassen-Granulat im Reaktor zu formen;
- Umfüllung des zuvor geformten aeroben Biomassen-Granulates;
- teilweise Entfernung des behandelten Abwassers, **gekennzeichnet dadurch, dass** nach jedem Einfüllen von Abwasser in den Reaktor, an die aerobe Phase eine Phase unter anoxischen Bedingungen folgt und nach jedem Einfüllen von Abwasser in den Reaktor der pH-Wert in besagtem Reaktor auf zwischen 8 und 9 gehalten wird, und zwar für eien festgelegten Zeitraum, der mindestens 10 % einer Zykluslänge entspricht
und **gekennzeichnet ist dadurch**, dass die Kalziumkonzentration im Abwasser angepasst wird, sodass man ein Kalzium/Phosphor-Molarverhältnis gleich oder größer als 1 erhält.

2. Die Behandlungsmethode gemäß Anspruch 1, **gekennzeichnet dadurch, dass** die Kalziumkonzentration im Abwasser angepasst wird, sodass man ein Kalzium/Phosphor-Molarverhältnis gleich oder größer als 1,7 erhält.

3. Die Behandlungsmethode gemäß Anspruch 1 oder 2, **gekennzeichnet dadurch, dass** der pH-Wert im Reaktor angepasst wird, und zwar durch die Regulation der Durchflussrate des mit Sauerstoff versetzten Gasflusses während der besagten aeroben Phase.

4. Die Behandlungsmethode gemäß Anspruch 1 oder 3, **gekennzeichnet dadurch, dass** die Phase unter anoxischen Bedingungen durch das Rezirkulieren einer Flüssigkeit durchgeführt wird, welche in einem oberen Teil des Reaktors angesammelt und schließlich in einem unteren Teil des Reaktors neu eingespritzt wird.

5. Diese Behandlungsmethode gemäß Anspruch 1 bis 4, **gekennzeichnet dadurch, dass** Nitrate dem Abwasser hinzugeführt werden, und zwar in einer Menge, sodass dort ein Massenverhältnis an Stickstoff-/Chemischem Sauerstoff-Bedarf von zwischen 1/10 und 1/4 entsteht.

6. Die Behandlungsmethode gemäß der Ansprüche 1 bis 5, **gekennzeichnet dadurch, dass** es zu mindestens einem Zyklus kommt, in welchem das aerobe Biomassen-Granulat nach besagtem Schritt des Abgießens zurückgewonnen wird.

7. Eine Methode zum Erhalt einer Kalziumphospatquelle aus mit Phosphor versetztem Abwasser umfasst:
- Implementierung einer Methode zur biologischen Behandlung von Abwasser gemäß einem der Ansprüche 1 bis 6.
- Zurückgewinnung von aerobem Biomassen-Granulat, das im Reaktor entstanden ist;
- Dehydrierung des besagten Granulats.

## Claims

1. A method for the biological treatment of wastewater containing pollutants, using an aerobic biomass, comprising a plurality of successive cycles of a duration that is predefined in order to achieve pollutants removal efficiency of 90 % or higher, each of said cycles comprising the following steps:
- introducing a wastewater effluent containing phosphorus and calcium in determined respective concentrations, into a reactor containing biomass;
- applying an aerobic phase by introducing into said reactor a gas flow containing oxygen, for a predefined length of time that is sufficient to form aerobic biomass granules in the reactor;
- decanting the aerobic biomass granules thus formed;
- and removing at least part of the treated effluent,
**characterized in that**, after each step of introducing effluent into the reactor the aerobic phase is preceded by a phase in anoxic conditions and after each step of introducing effluent into the reactor the pH in said reactor is maintained at a value above 8 and at a value below 9 for a length of time at least equal to 10% of the cycle duration
and **characterized in that** the concentration of calcium in the effluent is adjusted so as to obtain a calcium/phosphorus molar ratio equal to or greater than 1.

2. The treatment method according to claim 1, **characterized in that** the concentration of calcium in the effluent is adjusted so as to obtain a calcium/phosphorus molar ratio equal to or greater than 1.7.

3. The treatment method according to any of claims 1 to 2, **characterized in that** the pH in the reactor is adjusted by modulating the flow rate of the gas flow containing oxygen during said aerobic phase.

4. The treatment method according to any of claims 1 to 3, **characterized in that** the phase in anoxic conditions is realized by recirculating a liquid flow collected in an upper portion of the reactor and reinjected in a lower portion of the reactor.

5. The treatment method according to any of claims 1 to 4, **characterized in that** nitrates are added in the effluent, in an amount suitable to obtain therein a nitrogen/Chemical Oxygen Demand mass ratio of between 1/10 and 1/4.

6. The treatment method according to any of claims 1 to 5, **characterized in that** it comprises for at least one of said cycles a step of recovering aerobic biomass granules after said decantation step.

7. A method for obtaining a source of calcium phosphate from wastewater containing phosphorus, comprising:
- implementing a method for the biological treatment of wastewater according to any of claims 1 to 6;
- recovering aerobic biomass granules formed in the reactor;
- and dehydrating said granules.
